# EUROPÄISCHE PATENTSCHRIFT

(11) **EP 1 995 475 B1**
(45) Veröffentlichungstag und Bekanntmachung des Hinweises auf die Patenterteilung: **08.01.2014**
(21) Anmeldenummer: 08155345.5
(22) Anmeldetag: 29.04.2008
(51) Int. Cl.: F16B 37/06

(54) **Unrunde Stanzmutter**
Non-circular stamping nut
Ecrou embouti non circulaire

(30) Priorität: 15.05.2007 DE 102007022624
(43) Veröffentlichungstag der Anmeldung: 26.11.2008
(73) Patentinhaber: NEDSCHROEF PLETTENBERG GmbH, 58840 Plettenberg (DE)
(72) Erfinder: Can, Metin Nedschroef Plettenberg GmbH, 58300 Wetter (DE); Hirschfeld, Henning Nedschroef Plettenberg GmbH, 58840 Plettenberg (DE); Ferreau, Oliver Nedschroef Plettenberg GmbH, 58762 Altena (DE)
(74) Vertreter: Dörner, Kötter & Kollegen

(56) Entgegenhaltungen:
- WO-A1-03/008817
- WO-A1-2005/105364
- DE-A1- 1 400 934
- GB-A- 1 205 605
- US-A- 3 878 598
- US-A1- 2005 180 838
- US-A1- 2005 271 495
- US-B1- 6 220 804

## Beschreibung

### I. Anwendungsgebiet

Die Erfindung betrifft Stanzmuttern wie sie beispielsweise aus der DE 15 75 187 sowie der DE 36 26 466 bekannt sind.

Solche Stanzmuttern, die gemäß dem Oberbegriff des Anspruchs 1 ausgebildet sind, sind aus der GB 1 205 605, der US 2005/0180838, der DE 1 400 934 oder der US 3,878,598 bekannt.

### II. Technischer Hintergrund

Dabei wird die Stanzmutter in ein nicht vorgelochtes Blech eingepresst und wirkt dabei als Stanzstempel, die einen Butzen aus dem Blech ausstanzt.

Die Gegenkraft wird dabei von einer Matrize aufgebracht, die das Blech auf der der Stanzmutter gegenüberliegenden Seite um den auszustanzenden Butzen herum abstützt.

Um die notwendige drehfeste Fixierung der Stanzmutter im Blech zu erreichen, ist der im Blech steckende Schaftteil der Stanzmutter mit einem unrunden, polygonen Außenumfang ausgestattet, während die Matrize einen runden Durchmesser besitzt, damit keine bestimmte Drehlage der Stanzmutter beim Stanzen und Einpressen eingehalten werden muss.

Prinzipiell müssen dabei die so genannten Stanzmuttern, bei denen während des Einpressvorganges der Mutter in das Blech ausschließlich das Blech, aber nicht die Mutter selbst verformt wird, von den ähnlich gestalteten so genannten Nietmuttern unterschieden werden, bei denen während des Einpressvorganges auch die Mutter, teilweise zusätzlich zum Blech, verformt wird, meistens im freien Ende des Schaftbereiches. Bei derartigen Stanzmuttern ist eine der wesentlichen Kenngrößen die Drehmoment-Belastbarkeit, die die eingepresste Mutter verkraften kann, bevor sie im Blech durchdreht.

Dies wird vorzugsweise durch eine Formschlussverbindung zwischen Mutter und Blech erreicht, einerseits durch die polygone Ausgestaltung des Schaftteiles, andererseits durch die Erhebungen in der Fläche der Schulter der Mutter, an welche sich durch Fließvorgänge des Bleches beim Einpressen das umgebende Blechmaterial möglichst gut anlegt.

In der Praxis hat sich jedoch herausgestellt - auch unter Berücksichtigung der Tatsache, dass heute in der verarbeitenden Industrie immer härtere und damit sprödere und damit weniger fließfähige Blechsorten eingesetzt werden - dass dieses Fließvermögen überschätzt worden ist.

### III. Darstellung der Erfindung

### a) Technische Aufgabe

Es ist daher die Aufgabe gemäß der Erfindung, eine Stanzmutter-Vorrichtung sowie eine hierfür verwendbare Stanzmutter zu schaffen, deren Lösemoment nach dem Einpressen in ein Blech möglichst groß ist.

### b) Lösung der Aufgabe

Diese Aufgabe wird durch die Merkmale des Anspruchs 1 gelöst. Vorteilhafte Ausführungsformen ergeben sich aus den Unteransprüchen.

Durch den ovalen Querschnitt des Schaftes der Stanzmutter wenigstens an Stanzkontur, insbesondere auch an Presskontur, sowie insbesondere eine daran angepasste unrunde Innenkontur der verwendeten Matri ze, entsteht bereits beim Stanzen eine gegen ein Herausdrehen formschlüssige Verbindung zwischen dem Schaft der Stanzmutter und dem Blech, bereits ohne dass Fließvorgänge des Bleches in Hinterschnitte, Hohlräume oder Abflachungen der Stanzmutter hinein erfolgen.

Dadurch wird auch dann eine Drehsicherheit bewirkt, wenn das verwendete Blech sehr hart und spröde und damit dessen Fließfähigkeit relativ gering ist.

Diese ovale Kontur ist vorzugsweise eine absatzfreie Kontur, die sich vorzugsweise auch oberhalb der Presskontur zum Kopf der Stanzmutter hin fortsetzt, so dass sie sich im Wesentlichen über die gesamte Länge des Schaftes erstreckt.

Dadurch ist die Formschlussverbindung über die gesamte Höhe der Wirkverbindung zwischen dem Schaft der Stanzmutter und dem Blech gegeben und dadurch die Verdrehsicherheit besonders hoch.

Die ovale Außenkontur des Schaftes sollte dabei hinsichtlich ihrer Drehlage relativ zum Kopf der Stanzmutter bekannt sein, damit der ovale Schaft vor dem Einbringen der Stanzmutter ins Blech z. B. in übereinstimmende Drehlage zu dem insbesondere analog unrunden Innendurchmesser der Matrize gebracht werden kann.

Dies ist sinnvoll, um die Größe der Matrize möglichst eng an die Größe des Schaftes, insbesondere deren Stanzkontur, anpassen zu können.

Eine solche fluchtende Übereinstimmung der Drehlagen wird vollzogen, indem die Drehlage des ovalen Schaftes detektiert und der Schaft, d. h. die gesamte Stanzmutter, so gedreht wird, dass der Schaft hinsichtlich seiner Drehlage mit der Matrize fluchtet.

Wenn eine definierte Drehlage zwischen Schaft und Kopf der Stanzmutter gegeben ist, kann dieses Detektieren auch am Kopf der Stanzmutter erfolgen, beispielsweise durch formschlüssige Aufnahme des Stanzmutterkopfes in einem Pressstempel.

Falls eine Detektion der Drehlage über formschlüssiges Einpassen des Stanzmutternkopfes in einem entsprechenden Stempel nicht gewünscht wird, beispielsweise weil dies ein zu hohes Erfordernis an die Genauigkeit der Gestaltung des Stanzmuttern-Kopfes erfordern würden, kann der Schaft der Stanzmutter selbst mittels einer entsprechenden Zuführvorrichtung, in der er formschlüssig hinsichtlich seiner Drehlage aufgenommen werden kann, zur Einbringstelle gebracht werden, insbesondere indem die Zuführvorrichtung hinsichtlich ihrer Drehlage mit der Matrize wirkverbunden ist.

Dadurch ist sichergestellt, dass sich der Schaft in der richtigen Drehlage zur Matrize befindet, falls er in der Zuführvorrichtung formschlüssig aufgenommen ist, da deren Relativlage zur Matrize definiert, bekannt ist.

Dadurch, dass der Stanzstempel, d. h. die freie Stirnfläche des Schaftteiles einerseits und die auf der Gegenseite des Bleches angelegte Matrize in die die Stanzmutter beim Einpressen geringfügig eintaucht, einander entsprechende Umfangskonturen und nur einen begrenzten Durchmesserunterschied besitzen, wird der Butzen zuverlässig aus dem Blechteil ausgestanzt und fällt durch die Matrize ab.

Der Größen-Unterschied zwischen der Kontur der Matrize und der Kontur der Stirnfläche des Schaftteiles als Stanzstempel hängt von der Dicke des Blechteiles ab und liegt bei 8/100 bis 12/100 mm pro mm der Blechdicke. Dabei muss die als Stanzstempel wirkende freie Stirnfläche des Schaftteiles keineswegs die größte Aussendkontur des Schaftteiles darstellen.

Vielmehr hat sich gezeigt, dass die größte Außenkontur des Schaftteiles von der freien Stirnfläche aus zurückversetzt vorhanden sein sollte und diese größte Außenkontur, die sog. Presskontur, der die von Stanzkontur erzeugte Innenkontur im Blechteil radial nach außen schiebt, bereits wie der Rest des Schaftteiles ausgebildet sein sollte. Zwischen der größeren Presskontur und der stirnseitigen Stanzkontur verläuft also eine Pressschräge, die zwischen 10° und 20°, insbesondere zwischen 13° und 17°, zur Axialrichtung schräg steht.

Als richtige axiale Länge der Pressschräge hat sich eine Länge von 5% bis 25%, insbesondere von 8% bis 15%, der axialen Länge des Schaftteiles ergeben, sowie eine Winkelabweichung von 20 - 40°, insbesondere 30 - 40° von der Axialrichtung.

Dabei ist ferner zu beachten, dass die axiale Länge des Schaftteiles kürzer sein soll als die Dicke des Bleches, in welches die Stanzmutter eingesetzt werden soll, damit die eingesetzte Pressmutter auf der Gegenseite nicht über die Kontur des Blechteiles vorsteht und dort Probleme verursacht.

Dabei ist die Differenz zwischen Schaftlänge und Blechdicke nicht immer gleich, sondern hängt einerseits von der absoluten Dicke des Bleches und andererseits von der Materialpaarung Stanzmutter/Blechteil, insbesondere dem Material des Blechteiles, ab.

Als vorteilhafte Werte haben sich ergeben:
**Blech: Stahl;Mutter: Stahl**
   - Schaftlänge 0,05 - 0,3 mm, insbesondere 0,05 - 0,1 mm, kürzer als die Blechdicke und/oder
   - Schaftlänge 1% - 10% kürzer als die Blechdicke, Unterschied in % umso kleiner, je größer die Blechdicke.
**Blech: Leichtmetall;Mutter: Stahl**
   - Schaftlänge 0,1 - 0,4 mm, insbesondere 0,1 - 0,2 mm, kürzer als die Blechdicke und/oder
   - Schaftlänge 2% - 15% kürzer als die Blechdicke, Unterschied in % umso kleiner, je größer die Blechdicke.

Die Blechdicke beträgt in der Regel 2 - 6 mm.

Während durch die Verkürzung des Schaftteiles gegenüber dem Blechteil zuverlässig das Überstehen der eingesetzten Mutter über die Rückseite des Blechteiles verhindert wird, wird eine hohe Prozesssicherheit hinsichtlich des Abscherens des Butzens und Herabfallens dadurch erzielt, dass beim Einpressen der Mutter die freie Stirnfläche des Schaftteiles, also die Pressfläche, die Oberseite der Matrize nicht nur erreicht, sondern geringfügig in diese eintaucht, wodurch das Abscheren des Butzens erst zuverlässig erreicht wird, zusammen mit einer ausreichend geringen Durchmesserdifferenz zwischen Außendurchmesser des Pressstempels und Innendurchmessers der Matrize.

Da der Schaftteil der Stanzmutter im montierten Zustand nicht über die Rückseite des Bleches vorstehen soll, ist dies nur erreichbar durch eine ringförmig umlaufende Aufwölbung in der Matrizenstirnfläche, deren axiale Erstreckung größer ist als der Rückstand der freien Stirnfläche des Schaftteiles gegenüber der Blechrückseite im montierten Zustand.

Die axiale Erstreckung des Matrizendurchmessers ist dabei vorzugsweise geringer als die axiale Erstreckung der Pressschräge, so dass der Matrizendurchmesser an der Matrizenstirnfläche größer als die Stanzkontur des Schaftteiles und kleiner als seine Presskontur gewählt werden sollte.

Um die Drehmomentbelastbarkeit der eingesetzten Mutter nicht nur von dem Formschluss zwischen der Außenkontur des Schaftteiles und dem daran anliegenden Material des Blechteiles abhängen zu lassen, ist es bekannt, dass der schulterförmige Überstand des Mutternkopfes gegenüber dem Schaftteil nicht rechtwinklig zur axialen Richtung verläuft, sondern in Form einer schräg nach außen abfallenden Hinterschneidung, so dass bei einer unrunden Außenkontur des Kopfteiles sich die Ecken der schulterförmigen Unterseite des Kopfteiles zusätzlich in die Oberseite des Blechteiles einpressen und die Drehmomentbelastbarkeit weiter erhöhen.

Zum einen hat sich gezeigt, dass eine optimale Verhakung zwischen Schulter und Blechteil erzielt wird, wenn die nach außen unten abfallende Hinterschneidung nicht bis zum Außendurchmesser des Kopfes verläuft, sondern vorher in eine umgekehrte, nach außen oben wieder ansteigende Außenschräge übergeht. Die beste Wirkung wird erzielt, wenn die radiale Erstreckung der Außenschräge 10% bis 30%, insbesondere 15% bis 25%, der radialen Erstreckung der Schulter beträgt.

Weiterhin ist das Einpressen der Vorsprünge der Schulter in das Blechteil nur dann gegeben, wenn der Kopfteil der Stanzmutter wie beansprucht eine polygone Außenkontur besitzt, also wenn der Kopfteil beispielsweise nach Art einer üblichen Achtkantmutter geformt ist. Für viele Anwendungsfälle sind jedoch erfindungsgemäß auch Kopfteile mit runder Außenkontur gewünscht, da das Ansetzen eines Schraubenschlüssels oder ähnlichen Werkzeuges am Außenumfang ohnehin aufgrund der drehfesten Verbindung mit dem Blechteil nicht notwendig ist.

Um auch in diesem Fall die beschriebene Verhakungswirkung zwischen Schulter und Blechteil herbeizuführen, werden erfindungsgemäß zwei Alternativen vorgeschlagen:

Entweder verläuft - bei rundem Außendurchmesser des Kopfes - der Übergang zwischen der schräg abfallenden Hinterschneidung und der Außenschräge nicht in gleichbleibendem radialen Abstand, also ebenfalls entlang einer runden Kontur, auf der Schulter, sondern entlang einer polygonen Kontur, wodurch wiederum eine Verhakungswirkung erzielt wird.

Ein besseres Ergebnis wird jedoch erzielt, wenn die Schulter relativ zur Axialrichtung keine rotationssymmetrische Fläche darstellt, sondern eine in Umlaufrichtung gewellte oder vorzugsweise gezackte Fläche, die entweder bis zum Außendurchmesser durchgehen kann oder auch nur bis zum Übergang in die Außenschräge. Die Außenschräge selbst kann dann wiederum eine rotationssymmetrische, nicht gewellte oder gezackte, Fläche sein.

Die Verdrehsicherheit hängt somit natürlich auch von der radialen Erstreckung der Schulter ab, die umso größer sein sollte, je dünner und/oder härter das Blechteil ist.

Gerade hochfeste und damit spröde Blech-Sorten, wie sie zunehmend im Automobilbau eingesetzt werden, können zumindest in den Bereichen, die in größerer Entfernung vom Ausprägungspunkt der sie verformenden Kraft liegen, besser fließen als nahe an diesen Bereichen, da mit zunehmender Anzahl der Korngrenzen zwischen Einwirkungspunkt und dem Bereich des Materialflusses auch die Summe der Verschiebungen aus den einzelnen Korngrößen sich addiert.

Da der Krafteinwirkungspunkt die Anlageflächen der Schulter der Mutter einerseits und des Matrizenrandes anderseits sind, liegt der Bereich der Blechmitte des ausgestanzten Loches genau dazwischen, so dass hier die größte Fließfähigkeit gegeben ist.

Durch die Anordnung einer oder gar mehrerer Ringnuten im Schaftumfang werden weitere Hinterschneidungen zur Verfügung gestellt, in die Blechmaterial beim Einsetzen der Mutter einfließen kann, und die das vor allem axiale Herausziehen der Mutter erschweren, bei nicht umlaufender Ringnut auch das Ausdrehen erschweren.

Um eine optimal festsitzende Mutter im Blech zu erreichen, soll bewirkt werden, dass die Aufwölbung der Matrize ein Fließen des Blechmaterials in den Hinterschnitt an der Mutter hinein bewirkt. Hierfür darf sich diese Aufwölbung nicht bereits beim Stanzvorgang der Mutter vollständig im Blech einprägen.

Um dies zu vermeiden wird - sofern die Größe des Außenumfanges des Kopfes der Mutter nicht verändert werden kann - die Größe der Stanzkontur der Matrize verändert, um zwei im Grunde widersprüchliche Forderungen gleichzeitig zu erfüllen:

Einerseits wird die Stanzkontur der Matrize so gering gewählt, dass während des Stanzens der Stanzmutter im Blech, also bis die Schulter der Stanzmutter die Blechoberfläche erreicht, die Aufwölbung der Matrize noch nicht vollständig im Blech eingedrungen ist.

Auf der anderen Seite wird der Durchmesser der Matrize zumindest so groß gewählt, dass erst nach dem Einprägen der Schulter des Mutterkopfes im Blech die Aufwölbung der Matrize vollständig auf der Gegenseite ins Blech eindringt bis zur Anlage an der Planfläche der Matrize.

Alternativ oder auch ergänzend zu dieser Wahl der Matrizengröße kann auch ein Stempel mit einem die Stanzmutter umlaufenden Ringflansch gewählt werden, dessen axiale Erstreckung so gewählt ist, dass sich der Ringflansch mit seiner Stirnfläche auf dem Blech abstützt und auf diesem gegebenenfalls auch einprägt, wenn die Stanzmutter die richtige Einpresstiefe erreicht hat. Dadurch stützt sich der Stempel mit diesem Ringflansch gegenüber der vorzugsweise einen gleich großen Außendurchmesser besitzenden Matrize ab.

Dies hat erhebliche Vorteile:

Einerseits kann das richtige Einsetzen der Mutter kontrolliert werden, indem sich dann eine Kontrollmarkierung am Blech im Radialbereich außerhalb der Mutter, nämlich zwischen Ringflansch des Stempels und Planfläche der Matrize, ausbildet.

Des weiteren wird durch den ebenfalls anpressenden Ringflansch die Verfüllung des Hinterschnittes der Schulter der Stanzmutter optimiert, der Eindrückweg des Mutterkopfes ist definiert, die Reproduzierbarkeit des Einpressvorganges wird verbessert und damit die Ausdrückkräfte und die Ausdrehmomente in einen definierten Bereich gehalten, ohne die Geometrie der Stanzmutter verändern zu müssen.

Vor allem aber ist es dadurch möglich, die Anpressfläche gegen das Blech von der Seite des Mutternkopfes her zu verändern und damit in Relation zur Fläche der Stanzkontur und der Aufwölbung der Matrize, ohne die letztere ändern zu müssen.

Die Führung der Mutter wird dabei verbessert indem die Innenkontur des Ringflansches möglichst genau der Außenkontur des Mutternkopfes entspricht, also insbesondere einen Innensechskant besitzt und/oder die Mutter möglichst gut im Inneren von einem Konus oder besser einem zentralen Führungszapfen des Stempels geführt wird.

### c) Ausführungsbeispiele

Ausführungsformen gemäß der Erfindung sind im Folgenden beispielhaft näher beschrieben. Es zeigen:
- Fig. 1:: Stanzmutter und Matrize in unterschiedlichen Bewegungszuständen,
- Fig. 2:: eine Aufsicht auf die Stanzmutternvorrichtung gemäß der Erfindung von unten,
- Fig. 3:: Ansichten weiterer die Erfindung nicht illustrierender Stanzmuttern von unten,
- Fig. 4:: eine Vergrößerung aus Figur 3, und
- Fig. 5:: eine geänderte Stanzmuttern-Vorrichtung.

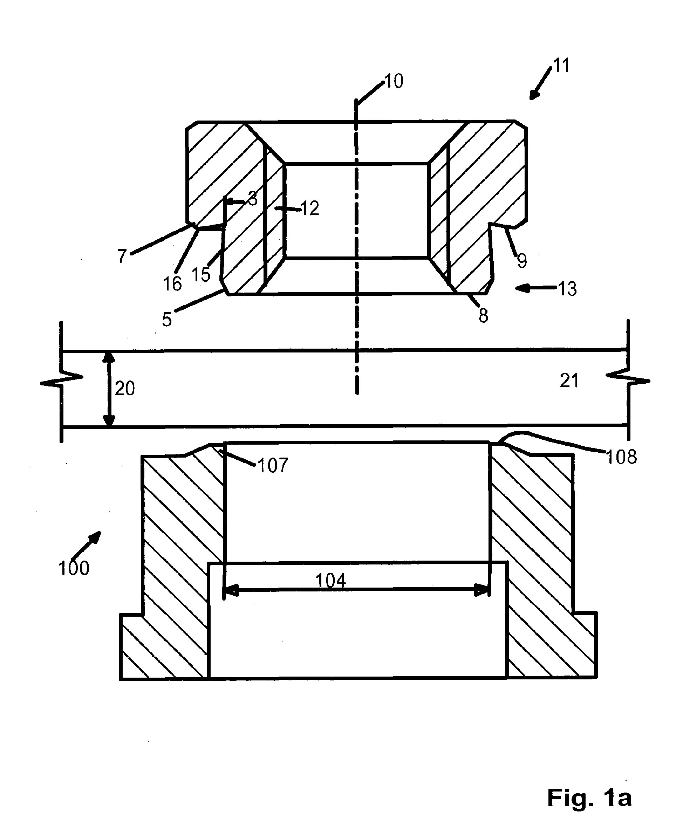

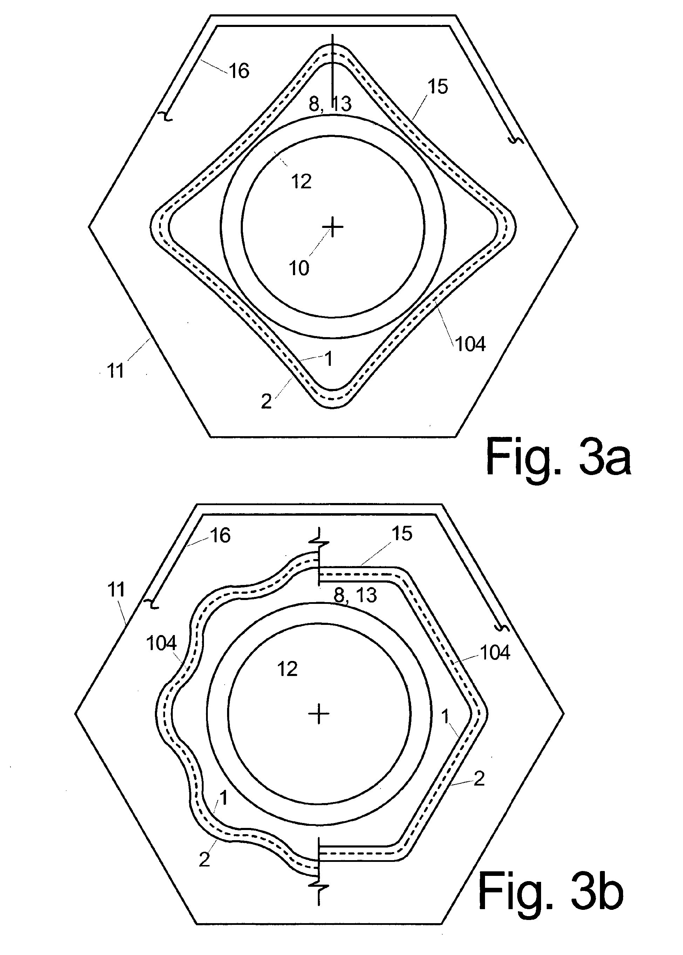

Die Fig. 1a und 3 lassen die Grundform der Stanzmutter am einfachsten erkennen, mit einem Schaftteil 13 und einem demgegenüber breiteren Kopfteil 11, die sich in Axialrichtung 10 aneinander anschließen, vorzugsweise einstückig miteinander ausgebildet sind und bei denen der Kopf - bis auf die polygonen Außenkonturen - rotationssymmetrisch ausgebildet ist.

Kopf 11 als auch Schaft 13 sind von einer Gewindebohrung 12 durchdrungen, die vorzugsweise als Durchgangsbohrung ausgebildet ist, jedoch auch eine Sacklochbohrung sein könnte mit einer dann geschlossenen freien Stirnfläche 8 am Schaftteil 13.

Der Außenumfang des Schaftes 13 ist dabei oval gestaltet.

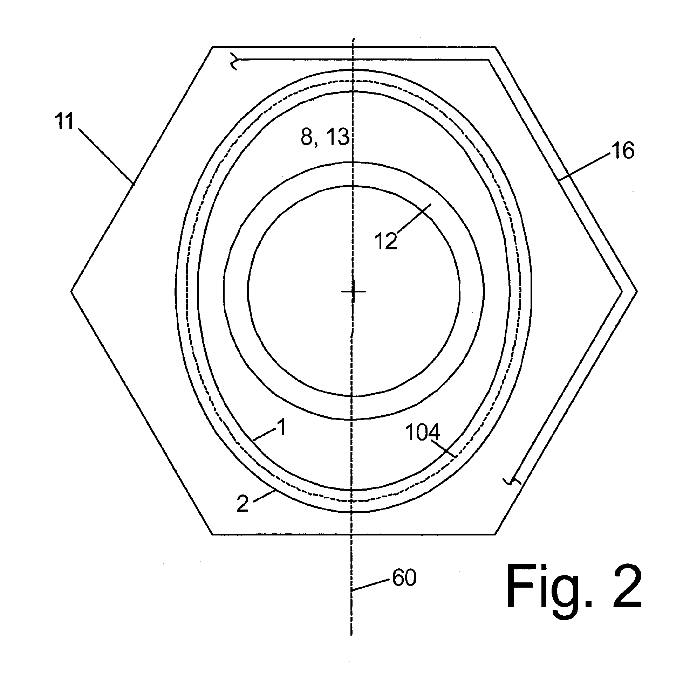

Wie Figur 2 in der Ansicht einer Stanzmutter von unten, d. h. vom Schaft 13 her zeigt, weist der Schaft erfindungsgemäß einen ovalen Außenumfang auf.

Die Gewindebohrung 12 ist dabei im Zentrum des elliptischen Schaftes 13 angeordnet, der wiederum zentrisch zum in diesem Fall sechseckigen Kopf 11 angeordnet ist und zwar in definierter Drehlage hierzu, in diesem Fall mit der Hauptachse 60 der Ellipse lotrecht zu einer der Sechskantflächen des sechseckigen Kopfes 11.

Wie aus Figur 2 zu entnehmen, sind dabei sowohl die Presskontur 2 als auch die kleinere Stanzkontur 1 jeweils elliptisch und konzentrisch zueinander ausgebildet.

In Figur 2 ist ferner auch der Matrizendurchmesser 104 eingezeichnet, d. h. der Innendurchmesser, mit dem die Matrize 100 beim Einpressen der Stanzmutter das Blech 21 abstützt.

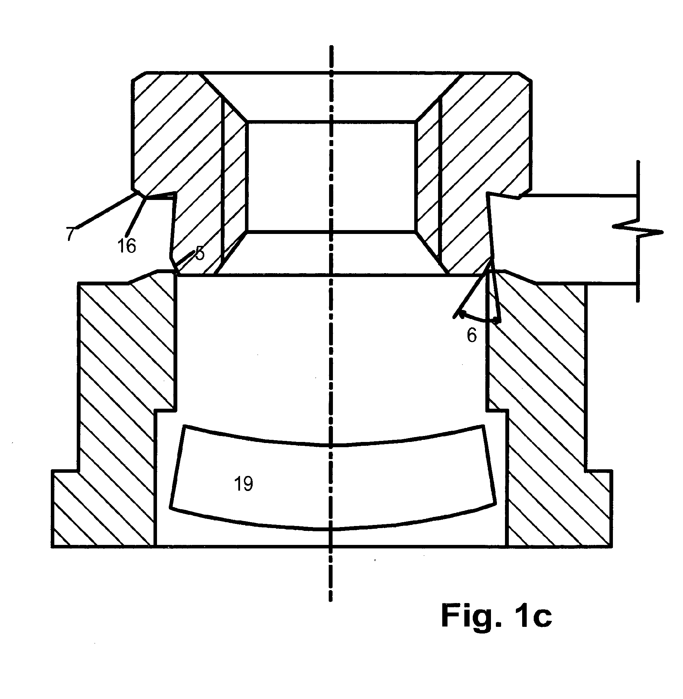

Wie ersichtlich, ist dieser Matrizendurchmesser von der Form her der Stanzkontur 1 ebenfalls elliptisch angepasst und verläuft in diesem Fall zwischen der Stanzkontur 1 und der größeren Presskontur 2 bei qualitativ gleicher Formgebung sowie in gleicher Drehlage, so dass bei dem Eintauchen der Stanzmutter, wie in Figur 1c dargestellt, der gegenüber dem Matrizendurchmesser 104 etwas kleinere Stanzkontur 1 etwas in die Matrize eintauchen kann.

Figur 3 zeigt dagegen andere unrunde Außenkonturen des Schaftteiles 13, die die Erfindung nicht illustrieren.

In Figur 3a ist die Außenkontur etwa quadratisch, d. h. gebildet aus vier Polygonflächen 15, die an den Kanten gerundet ineinander übergehen. Die einzelnen Polygonflächen 15 des Quadrates sind bei Betrachtung in der Axialrichtung 10 wie in Figur 3a dargestellt leicht konkav ballig.

Eine analoge Form besitzt die Matrizenkontur 104.

In Figur 3b sind zwei verschiedene Schaftformen 13 hinsichtlich des Querschnittes dargestellt:

In der rechten Bildhälfte ist der Schaft 13 ebenfalls polygon gestaltet, in diesem Fall bestehend aus sechs gleichgroßen Polygonflächen 15, in der Drehlage symmetrisch zu dem ebenfalls sechseckigen Kopf 11 der Stanzmutter.

In der linken Bildhälfte ist die unrunde Kontur des Schaftes 13 in Wellenform ringförmig umlaufend gestaltet, d. h. mit radial etwas weiter nach außen weisenden Ausbuchtung und dazwischen Einbuchtungen nach innen.

In allen in Figur 3 dargestellten Lösungen ist die Form der Stanzkontur 1 die Gleiche wie die der Presskonturen 2, so dass diese beiden Durchmesser im gleich bleibenden Abstand zueinander verlaufen.

Dies muss nicht immer so ablaufen, die Presskontur 2 kann auch einen unterschiedlichen Abstand und dadurch eine etwas andere Form als die Stanzkontur 1 besitzen.

In den Fällen der Figur 3 ist die Form des Matrizendurchmessers 104 jeweils die Gleiche wie die der Stanzkontur 1 und liegt hinsichtlich der Größe dieser Kontur zwischen der Stanzkontur 1 und der Presskontur 2.

Ferner ist in allen in Figur 3 dargestellten Fällen die unrunde Außenkontur des Schaftes 13 zentrisch zum Kopf 11 angeordnet und die Gewindebohrung 12 wiederum zentrisch innerhalb der Stanzkontur 1 bzw. Presskontur 2.

Außerdem ist sowohl in Figur 3a als auch in Figur 3b am äußeren Rand der Stirnfläche des Kopfes 11 die Möglichkeit einer insbesondere ringförmig umlaufenden Erhebung 16 eingezeichnet, die sich dann besonders tief in die Oberfläche des Bleches 21 einprägt.

Falls die unrunde Kontur des Schaftes 13 durch Polygonflächen 15 gebildet wird, gehen diese nicht bis zur freien Stirnfläche 8 des Schaftteiles 13 durch, da der größte Durchmesser des Schaftteiles 13 nicht der Stanzkontur 1 am vorderen freien Ende, also der Stirnfläche 8, ist, sondern ein demgegenüber zurück versetzter, größerer Presskontur 2.

Die Polygonflächen 15 laufen im Bereich der Pressschräge 5 zwischen der Stanzkontur 1 und der Presskontur 2 aus, wodurch der Presskontur 2 hinsichtlich des Umfanges eine polygone Kontur ergibt, die Stanzkontur 1 dagegen eine runde Kontur.

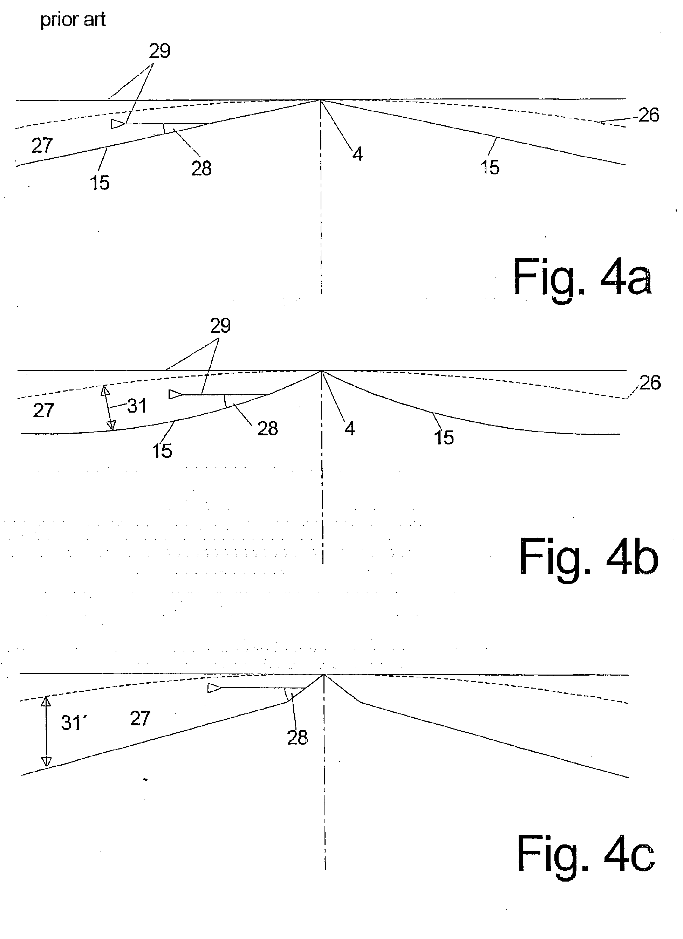

Dabei ist jeweils in der linken Bildhälfte eine konkave Ausbildung der Polygonflächen 15 eingezeichnet und zwar eine Kavität ausgebildet bei Betrachtung in axialer Richtung 10 und auch ist eine Kavität bei Betrachtung in tangentialer Richtung möglich, die natürlich auch miteinander kombiniert werden können. Dabei zeigt Fig. 4 in einer vergrößerten Darstellung anhand einer Kanten 4 zwischen zwei Polygonflächen 15 die Wirkung dieser konkaven Ausbildung:

Fig. 4 a zeigt ebene Polygonflächen 15 gemäß des Standes der Technik, die sich an einer Kante 4 treffen.

Bei einer Drehmomentbelastung greift die Kraft 29 in Umfangsrichtung, also in Richtung der Tangentiale zum gestrichelt dargestellten Hüllkreis um den polygonen Schaft 13 an der Mutter an, und presst damit unter einem Keilwinkel 28 gegen vor allem die Randbereiche der Polygonflächen 15.

Fig. 4 a zeigt, dass abhängig von der Größe des Hüllkreises und der Anzahl der Polygonflächen dieser Keilwinkel 28 sehr kein ist, und damit eine starke Keilwirkung auftritt, die mit der Zeit ein Lösen dieser Formschlussverbindung bewirken kann.

Dagegen zeigt Fig. 4 b bei gleichem Radius des Hüllkreises und gleicher Anzahl an Polygonflächen 15 konkav ausgebildete Polygonflächen 15. Dabei wird unmittelbar ersichtlich, dass sich hierbei bei ansonsten gleichen Verhältnissen ein deutlich größerer Keilwinkel 28 ergibt.

Allerdings besitzen nunmehr die Differenzflächen 27 zwischen Hüllkreis und Polygonflächen eine wesentlich größere radiale Tiefe 31, die beim Einpressen der Mutter vom Blechmaterial durch Fließen des Materials überwunden werden muss.

Fig. 4 c zeigt eine im Gegensatz zu Fig. 4 b nicht mehr kreisbogenförmige Gestaltung der konkaven Polygonfläche, sondern eine aus geraden Abschnitten zusammengesetzte Kavität, so dass ein gleichgroßer Keilwinkel 28 mit deutlich geringerer radialer Tiefe 31' erzielbar ist, was vor allem bei harten und spröden Blechen zu bevorzugen ist.

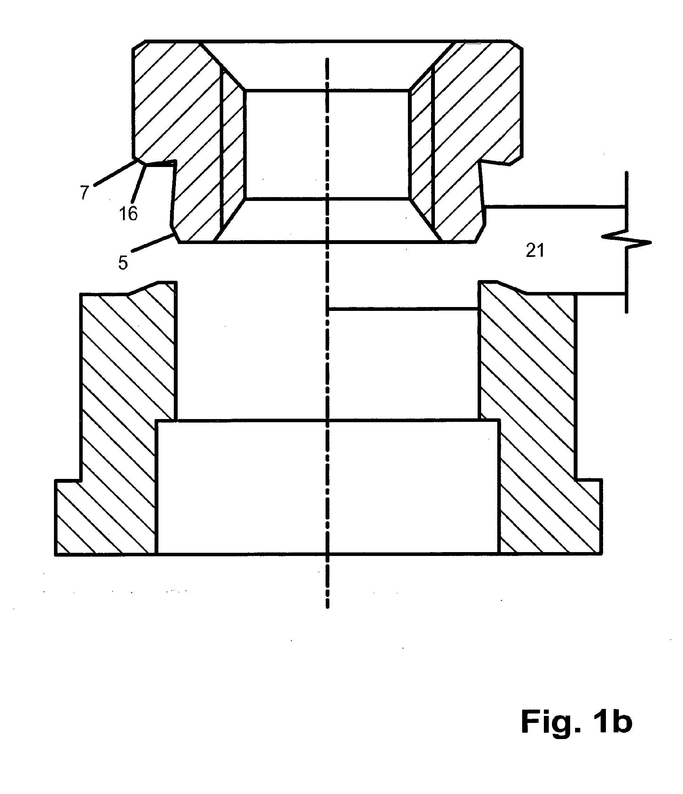

Wie Fig. 1b zeigt, stanzt die kleinere Stanzkontur 1 primär den Butzen 19 aus, indem er ihn - wie vor allem Fig. 1 c zeigt - gegenüber dem Matrizendurchmesser 104 abschert. Die in Einpressrichtung weiter hinten liegende Presskontur 2 vergrößert die Einpressöffnung durch Verdrängen des umgebenden Blechmaterials, erreicht jedoch die Matrize 100 nicht mehr, da deren Stirnflächen, insbesondere die dort vorhandene Aufwölbung 107, auch am Ende der Einpressbewegung dieser Presskontur 2 in der Regel nicht mehr erreicht. Die Aufwölbung 107 zusammen mit den sich in der Oberseite des Bleches durch die Hinterschneidung des Schaftteiles 13 gebildeten Erhebungen in der Schulter 9 des Kopfteiles 11 bewirken ein Fließen des Blechmaterials an dem hinterschnittenen Schaftteil 13 und die formschlüssige Anlage an dessen Polygonflächen 15.

Um mittels der Hinterschneidung in der Schulter 9 des Kopfteiles 11 ebenfalls eine drehfeste Verhakung der Stanzmutter im Blechteil zu bewirken, selbst bei rundem Außenumfang des Kopfes, sind mehrere Ausformungen, auch in Kombination miteinander, möglich.

Wie die Aufsicht auf die Schulter 9 in der Fig. 2 und auch den Fig. 1 zeigt, wird bevorzugt die Hinterschneidung nicht bis zum Außenumfang fortgesetzt, sondern geht vor Erreichen des äußeren Randes in eine Außenschräge 7 über. Die dadurch vom äußeren Rand nach innen versetzte Erhebung 16 läuft bei einer nicht runden Außenkontur des Kopfes 11, wie in der rechten Hälfte der Fig. 2 dargestellt, ebenfalls unrund um und ergibt bereits eine drehfeste, formschlüssige Verbindung gegenüber dem Blech.

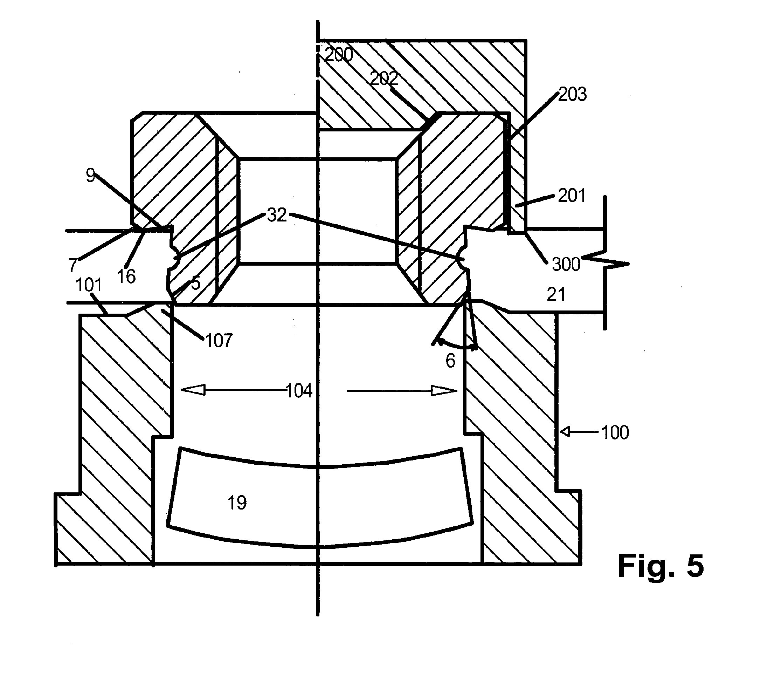

Figur 5 zeigt eine Bauform der gesamten Vorrichtung in einem Längsschnitt analog zu Figur 1 c mit weiteren Verbesserungen:

Zum einen ist im Schaftteil 13 der Stanzmutter im Außenumfang eine Ringnut 32 angeordnet, die hier einen bogenförmigen, d. h. halbkreisförmigen, Querschnitt besitzt und zumindest die am weitesten nach außen ragenden Bereiche, die Kanten 4 des Schaftteiles 13 durchschneidet, und vorzugsweise umlaufend im gesamten Schaftteil 13 vorhanden ist.

Dadurch wird die Ausziehbarkeit erschwert, da auch in diesem - in axialer Richtung als Hinterschnitt wirkender Nut - Material einfließen kann.

Des Weiteren ist in der rechten Bildhälfte der die Stanzmutter in Richtung Matrize 100 pressende Stempel 200 dargestellt, der in diesem Fall einen außen um die Stanzmutter umlaufenden Ringflansch 201 aufweist.

Dieser Ringflansch 201 dient der verbesserten Führung der Stanzmutter, vor allem aber ist die axiale Länge des Ringflansches 201 in Relation zur axialen Länge Stanzmutter und insbesondere deren Kopfteil 11 so gewählt, dass bei korrekter Einpresstiefe der Mutter in das Blech 21 der Ringflansch 201 sich bereits ebenfalls in der Oberseite des Bleches 21 einprägt und dort eine Markierungsprägung 300 hinterlässt.

Im Zentrum des Stempels 200 kann ein Konus 202 gegen die Stanzmutter vorstehen zur Anlage an der Anschrägung des Innengewindes der Stanzmutter, was ebenfalls die Führung und Zentrierung der Mutter erleichtert.

Der Innenumfang des Ringflansches 201 ist dabei entsprechend der Außenkontur des Kopfteiles der Stanzmutter geformt, beispielsweise mit einem Innensechskant 203 bei einem Sechskantkopf der Stanzmutter.

Wie an der Stellung der Matrize 100 auf den beiden Seiten der Figur 5 zu erkennen, sind in den beiden Bildhälften unterschiedliche Zustände des Einspressvorganges dargestellt:

In der rechten Hälfte ist der Einpressvorgang beendet, was sich darin äußerst, dass die Matrizen-Planfläche 101 an der Unterseite des Bleches 21 anliegt, und der Ringflansch 201 sich in der Oberseite des Bleches 21 bereits eingeprägt hat.

Die linke Bildhälfte zeigt den Zustand kurz vorher, was darin ersichtlich ist, dass die Aufwölbung 107 der Matrize sich noch nicht vollständig im Blech 21 eingeprägt hat und damit der Fließvorgang des Bleches 21 noch nicht abgeschlossen ist.

### BEZUGSZEICHENLISTE

- 1: Stanzkontur
- 2: Presskontur
- 3: Halskontur
- 4: Kanten
- 5: Pressschräge
- 6: Presswinkel
- 7: Außenschräge
- 8: Stirnfläche
- 9: Schulter
- 10: Axialrichtung
- 11: Kopf
- 12: Gewindebohrung
- 13: Schaftteil
- 15: Polygonfläche
- 16: Erhebung
- 17: konkaver Radius
- 18: konkaver Radius
- 19: Butzen
- 20: Blechdicke
- 21: Blech
- 22: Konkave Tiefe
- 23: Zwischenwinkel
- 24a,b: Flanke
- 25: Flankenwinkel
- 26: Hüllkreis
- 27: Differenzfläche
- 28: Keilwinkel
- 29: Kraft
- 30: Tangentialrichtung
- 31: radiale Tiefe
- 32: Ringnut
- 60: Hauptachse
- 101: Matrizenplanfläche
- 104: Matrizendurchmesser
- 107: Aufwölbung
- 200: Stempel
- 300: Markierungsprägung

## Patentansprüche

1. Stanzmutter mit einem Kopf (11) und einem demgegenüber um eine umlaufend angeordnete Schulter (9) zurückversetzten, schmaleren Schaft (13), wobei der Schaft (13) eine unrunde Stanzkontur (1) aufweist, **dadurch gekennzeichnet, dass** der Schaft (13) einen ovalen Außenumfang aufweist, wobei der Kopf (11) eine polygone oder eine runde Außenkontur besitzt.

2. Stanzmutter nach Anspruch 1, **dadurch gekennzeichnet, dass** der Schaft (13) elliptisch ausgebildet ist.

3. Stanzmutter nach Anspruch 2, **dadurch gekennzeichnet, dass** der Schaft (13) eine konzentrisch zur Stanzkontur (1) angeordnete elliptisch ausgebildete Presskontur (2) aufweist.

4. Stanzmutter nach Anspruch 3, **dadurch gekennzeichnet, dass** die axiale Länge der zwischen Presskontur (2) und Stanzkontur (1) ausgebildete Presschräge (5) zwischen 5% und 25%, insbesondere zwischen 8% und 15% der axialen Länge des Schaftes (13) beträgt.

5. Stanzmutter nach einem der vorgenannten Ansprüche, **dadurch gekennzeichnet, dass** eine vom Schaft (13) nach außen schräg abfallende Hinterschneidung (14) vor dem Außendurchmesser des Kopfes (11) endet und in eine Außenschräge (7) übergeht, die nach außen ansteigt.

6. Stanzmutter nach Anspruch 5, **dadurch gekennzeichnet, dass** die radiale Erstreckung der Außenschräge (7) zwischen 10% und 30%, insbesondere zwischen 15% und 25% der radialen Erstreckung der Schulter (9) beträgt.

7. Stanzmutter nach Anspruch 5 oder 6, **dadurch gekennzeichnet, dass** der Schrägstellungswinkel der Außenschräge (7) gegenüber der Querebene zur axialen Richtung (10) zwischen 10° und 30°, insbesondere zwischen 15° und 25° beträgt.

8. Stanzmutter nach einem der vorgenannten Ansprüche, **dadurch gekennzeichnet, dass** die Schulter (9) relativ zur Axialrichtung (10) auch bei rundem Außendurchmesser des Kopfes (11) keine rotationssymmetrische Fläche ist, sondern eine in Umlaufrichtung gewellte oder gezackte Fläche.

9. Stanzmutter nach einem der vorgenannten Ansprüche, **dadurch gekennzeichnet, dass** im Umfang des Schaftes (13) eine oder mehrere zumindest teilweise umlaufende Ringnuten angeordnet sind.

10. Stanzmutter nach einem der vorgenannten Ansprüche, **dadurch gekennzeichnet, dass** die Stanzmutter eine zentrale Durchgangsöffnung ohne Innenwände besitzt zum Zusammenwirken mit einer selbstschneidenden Schraube.

## Claims

1. Stamping nut with a head (11) and a narrower shaft (13) backwardly offset around a circumferential shoulder (9) arranged opposite the head (11), where the shaft (13) has a non-circular stamping contour (1), **characterised in that** the shaft (13) has an oval outer circumference, where the head (11) has a round or polygonal outer contour.

2. Stamping nut in accordance with claim 1, **characterised in that** the shaft (13) is elliptical in shape.

3. Stamping nut in accordance with claim 2, **characterised in that** the shaft (13) has an elliptically shaped pressure contour (2) arranged concentrically to the stamping contour (1).

4. Stamping nut in accordance with claim 3, **characterised in that** the axial length of the pressure bevel (5) formed between the pressure contour (2) and the stamping contour (1) is between 5 % and 25 %, preferably between 8 % and 15 % of the axial length of the shaft (13).

5. Stamping nut in accordance with any of the above claims, **characterised in that** an undercut (14) falling away from the shaft (13) obliquely towards the outside, ends before the outer diameter of the head (11) and merges into an outer bevel (7) which rises towards the outside.

6. Stamping nut in accordance with claim 5, **characterised in that** the radial extent of the outer bevel (7) is between 10 % and 30 %, preferably between 15 % and 25 % of the radial extent of the shoulder (9).

7. Stamping nut in accordance with claim 5 or claim 6, **characterised in that** the angle of inclination of the outer bevel (7) to the plane perpendicular to the axial direction (10) is between 10° and 30°, preferably between 15° and 25°.

8. Stamping nut in accordance with any of the above claims, **characterised in that** the shoulder (9) is not a rotationally symmetrical surface in relation to the axial direction (10), even when the outer diameter of the head (11) is circular, but is an undulating or serrated surface in the direction of rotation.

9. Stamping nut in accordance with any of the above claims, **characterised in that** one or more at least partially circumferential ring grooves are arranged in the circumference of the shaft (13).

10. Stamping nut in accordance with any of the above claims, **characterised in that** the stamping nut has a centrally located opening without inner walls to enhance the effect of a self-tapping screw.

## Revendications

1. Écrou embouti non circulaire présentant une tête (11) et, en face d'elle, une queue (13) plus étroite en retrait autour d'un épaulement (9) périphérique, sachant que la queue (13) présente un contour embouti (1) non circulaire, **caractérisé en ce que** la queue (13) présente une géométrie extérieure ovale, sachant que la tête (11) possède un contour extérieur polygonal ou circulaire.

2. Écrou embouti non circulaire selon la revendication 1, **caractérisé en ce que** la queue (13) est de géométrie elliptique.

3. Écrou embouti non circulaire selon la revendication 2, **caractérisé en ce que** la queue (13) présente un contour matricé (2) de configuration elliptique agencé concentriquement au contour embouti (1).

4. Écrou embouti non circulaire selon la revendication 3, **caractérisé en ce que** la longueur axiale du chanfrein (5) matricé situé entre le contour matrice (2) et le contour embouti (1) est comprise entre 5 et 25 %, en particulier entre 8 et 15 % de la longueur axiale de la queue (13).

5. Écrou embouti non circulaire selon l'une des revendications précédentes, caractérisé ce qu'une contre dépouille (14) descendant en biais vers l'extérieur depuis la queue (13) aboutit avant le diamètre extérieur de la tête (11) et devient un chanfrein (7) extérieur augmentant en direction de l'extérieur.

6. Écrou embouti non circulaire selon la revendication 5, **caractérisé en ce que** l'étendue radiale du chanfrein extérieur (7) est comprise entre 10 et 30 %, en particulier entre 15 et 25 % de l'étendue radiale de l'épaulement (9).

7. Écrou embouti non circulaire selon la revendication 5 ou 6, **caractérisé en ce que** l'angle d'inclinaison du chanfrein extérieur (7) en face du plan transversal par rapport au sens axial (10) est compris entre 10 et 30°, en particulier entre 15 et 25°.

8. Écrou embouti non circulaire selon l'une des revendications précédentes, **caractérisé en ce que** l'épaulement (9) relativement au sens axial (10) n'est pas non plus une surface à symétrie de révolution lorsque la tête (11) présente un diamètre extérieur circonférentiel, mais une surface ondulée ou dentée dans le sens de circulation.

9. Écrou embouti non circulaire selon l'une des revendications précitées, **caractérisé en ce que** sur la périphérie de la queue (13) ont été ménagées une ou plusieurs gorges annulaires en partie périphériques.

10. Écrou embouti non circulaire selon l'une des revendications précédentes, **caractérisé en ce que** l'écrou embouti possède un orifice de passage central sans parois intérieures pour interagir avec une vis autotaraudeuse.
